# EUROPÄISCHE PATENTANMELDUNG

(11) **EP 0 926 002 A1**
(43) Veröffentlichungstag der Anmeldung: **30.06.1999**
(21) Anmeldenummer: 98122963.6
(22) Anmeldetag: 03.12.1998
(51) Int. Cl.: B60P 7/13

(54) **Haltevorrichtung für eine in zwei Höhenlagen arretierbare Container-Verriegelungseinrichtung**

(30) Priorität: 15.12.1997 DE 19755638
(71) Anmelder: Jost - Werke AG, 60528 Frankfurt am Main (DE)
(72) Erfinder: Taube, Reinhard, 34471 Volkmarsen (DE)
(74) Vertreter: Fuchs Mehler Weiss & Fritzsche

(57) **Zusammenfassung**

Es wird eine Haltevorrichtung (1) für Container-Verriegelungseinrichtungen beschrieben, die leichter, kompakter und kostengünstiger sind. Die Container-Verriegelungseinrichtung ist im Schieber (20) der Haltevorrichtung (1) angeordnet. Der Schieber (20) weist ein Rohr (21, 21') auf, in dem der Drehzapfen (61) der Verriegelungseinrichtung verschiebbar gelagert ist. Das Rohr (21, 21') weist ein Innenrohr (30, 30') auf, das sich vom unteren Ende des Rohres (21, 21') bis zum Bolzen (23a,b) erstreckt und diesen abstützt. Im Rohr (21, 21') kann oberhalb des Innenrohrs (30, 30') eine in eine angehobene und eine abgesenkte Position verschiebbare Kulisse (70) angeordnet sein. Der Bolzen (23a,b) bildet im Innern des Rohres (21, 21') einen zweiten Vorsprung, auf dem sich die Kulisse (70) in der angehobenen Position abstützt.

## Beschreibung

Die Erfindung betrifft eine am Fahrgestell eines Fahrzeugs zu befestigende Haltevorrichtung für eine in zwei Höhenlagen arretierbare Container-Verriegelungseinrichtung, die einen Drehzapfen mit einem Spannelement aufweist, wobei die Haltevorrichtung einen in vertikaler Richtung beweglichen Schieber aufweist, der in den beiden Höhenlagen mittels eines Riegels verriegelbar ist.

Aus der DE 31 01 875 C 2 ist beispielhaft eine Container-Verriegelungseinrichtung bekannt, die auch als Twistlock bezeichnet wird. Derartige Container-Verriegelungseinrichtungen werden an den Querträgern oder am Rahmen eines Sattelaufliegers für Container angebracht. Der Drehzapfen der Container-Verriegelungseinrichtung wird von unten in eine entsprechende Öffnung im Rahmen des Containers eingeführt, gedreht und anschließend mittels eines Spannelementes angezogen und somit verriegelt.

Man unterscheidet absenkbare und nicht absenkbare Twistlocks, je nachdem ob der Drehzapfen und die Führungsbuchse bei Nichtgebrauch in seinem Gehäuse absenkbar ist oder nicht. Solche absenkbaren Twistlocks werden beispielsweise in DE 21 28 872 beschrieben. Diese Twistlocks haben den Nachteil, daß zusätzliche Handgriffe zum Verriegeln der Führungsbuchse in der oberen Stellung mittels einer Nutenbuchse notwendig sind.

Da es bei den Sattelaufliegern für Container unterschiedliche Ausführungen gibt, müssen die Container-Verriegelungseinrichtungen an die jeweilige Einbaulage angepasst werden. Bei den sogenannten Gooseneck-Chassis ist der hintere Teil des Rahmens abgesenkt. Auf einem solchen Chassis können sowohl kleinere Container transportiert werden, die auf dem abgesenkten Rahmenteil unmittelbar aufliegen oder auch große Container, die jedoch wegen des Überstandes des Goosenecks auf dem hinteren Rahmenteil nicht aufliegen können. Dies bedeutet, daß die Container-Verriegelungseinrichtung für diese beiden Anwendungsfälle ausgelegt sein muß. Die Container-Verriegelungseinrichtungen, die am hinteren und auch mittleren Rahmenteil solcher Sattelauflieger angeordnet sind, müssen daher in einer oberen und in einer unteren Höhenlage relativ zum Fahrgestell einstellbar sein.

Aus der DE 195 38 915 A 1 ist eine Haltevorrichtung bekannt, mit der die Container-Verriegelungseinrichtung in diesen beiden gewünschten Höhenlagen verriegelbar ist. Solche Haltevorrichtungen weisen einen Schieber auf, der in den beiden Höhenlagen mittels eines in einem Gehäuse gelagerten Riegels, der beispielsweise ein Vierkantrohr sein kann, verriegelbar ist. Die Container-Verriegelungseinrichtung ist unlösbar, vorzugsweise durch Schweißen seitlich an dem Schieber befestigt.

Diese bekannte Vorrichtung hat jedoch den Nachteil, daß sie ein großes Gewicht aufweist, einen großen Platzbedarf hat und ein anderes Vormaß besitzt als die Container-Verriegelungseinrichtungen ohne Höhenverstelleinrichtung, weil die Höhenverstelleinrichtung zwischen dem Rahmen und der Container-Verriegelungseinrichtung angeordnet ist. Es müssen daher entsprechende Maßnahmen am Rahmen vorgenommen werden, um den vorgeschriebenen Abstand gegenüberliegender Container-Verriegelungseinrichtungen einhalten zu können.

Aufgabe der Erfindung ist eine Haltevorrichtung für Container-Verriegelungseinrichtungen, die leichter, kompakter und kostengünstiger ist als die bekannten Haltevorrichtungen.

Diese Aufgabe wird mit einer Haltevorrichtung gelöst, bei der die Container-Verriegelungseinrichtung im Schieber der Haltevorrichtung angeordnet ist.

Dadurch, daß die Container-Verriegelungseinrichtung in die Haltevorrichtung integriert ist, entfällt ein zusätzliches Gehäuse sowie die üblicherweise vorhandene Nutenbuchse. Durch den Wegfall dieser Bauteile wird Gewicht eingespart. Außerdem wird durch die Integration der Container-Verriegelungseinrichtung in die Haltevorrichtung der Drehzapfen näher am Fahrzeugrahmen angeordnet, so daß ohne zusätzliche Maßnahmen übliches Vormaß von Twistlocks eingehalten werden kann.

Vorzugsweise weist der Schieber ein Rohr auf, in dem der Drehzapfen verschiebbar gelagert ist. Der Drehzapfen kann daher mittig in der Haltevorrichtung angeordnet werden.

Das Rohr weist vorzugsweise an seiner Außenseite mindestens einen ersten Vorsprung auf, der in den beiden Höhenlagen mit dem Riegel zusammenwirkt. In der unteren Höhenlage untergreift dieser Vorsprung den Riegel, während in der oberen Höhenlage der Vorsprung auf dem Riegel aufliegt. Es können dadurch zwei stabile Positionen eingestellt werden.

Gleichzeitig dienen die Vorsprünge zur Verdrehsicherheit des Systems.

Vorzugsweise ist das Rohr senkrecht zu seiner Längsachse von mindestens einem Bolzen durchsetzt, dessen eines Ende den ersten Vorsprung bildet und dessen anderes Ende gegenüber der Rohrwand nach innen vorsteht. Der Bolzen erstreckt sich nicht wie bei den Vorrichtungen gemäß dem Stand der Technik durch das Innere des Rohrs, sondern ist verkürzt ausgebildet, damit im Innern des Rohrs der Drehzapfen und gegebenenfalls weitere Bauteile eingesetzt und bewegt werden können, die für die Verschiebung des Drehzapfens erforderlich sind.

Vorzugsweise werden an gegenüberliegenden Seiten des Rohrs zwei Bolzen vorgesehen, die bei dieser Ausführungsform zwei erste Vorsprünge bilden.

Da der oder die Bolzen eine kurze Baulänge aufweisen und nur mittig in der Rohrwand gehalten werden, andererseits aber große Kräfte aufnehmen müssen, ist es für die Stabilität des Bolzens vorteilhaft, wenn das Rohr zusätzlich ein Innenrohr aufweist, das sich vom unteren Ende des Rohrs bis zum Bolzen erstreckt und diesen abstützt. Da in der Verriegelungsposition Kräfte auf den Bolzen einwirken und andererseits das Spannelement Kräfte von unten einleitet, ist es von Vorteil, wenn sich das Spannelement an der unteren Stirnfläche da Innenrohrs und nicht an der Stirnfläche des Rohrs abstützt. Das Spannelement und das Innenrohr sind daher entsprechend ausgebildet.

Vorzugsweise ist das Innenrohr mit dem oder den Bolzen verschweißt.

Wenn es sich um eine Container-Verriegelungseinrichtung handelt, bei der der Drehzapfen nicht absenkbar ist, ist eine Führungsbuchse für den Drehzapfen am oberen Ende des Rohrs befestigt. Die Führungsbuchse kann beispielsweise in das Rohr eingeschweißt sein.

Wenn der Drehzapfen absenkbar ausgebildet sein soll, ist anstelle der sonst üblicherweise vorhandenen Nutenbuchse vorteilhafterweise oberhalb des Innenrohrs eine in einer angehobenen und einer abgesenkten Position verschiebbare Kulisse vorgesehen. Der Bolzen, der gegenüber dem Rohr nach außen vorsteht und einen ersten Vorsprung bildet, übernimmt in dieser Ausführungsform eine zusätzliche Abstützfunktion, die dadurch zustande kommt, daß der Bolzen im Innern des Rohrs einen zweiten Vorsprung bildet, auf dem sich die Kulisse in der angehobenen Position abstützt.

Die Kulisse besteht vorzugsweise aus einem Rohrstück, dessen Außendurchmesser geringfügig kleiner ist als der Innendurchmesser des Rohrs, so daß die Kulisse im Rohr geführt wird. Dadurch, daß die Kulisse während des Verschiebens von der abgesenkten in die angehobene Position und umgekehrt an dem oder den Bolzen vorbeibewegt werden muß, muß der Außendurchmesser an der betreffenden Stelle entsprechend verringert sein. Die Kulisse weist daher mindestens eine gegenüber dem Außenumfang zurückversetzte ebene Seitenfläche zum Vorbeiführen am Bolzen auf. Die Anzahl der ebenen Seitenflächen entspricht der Anzahl der im Rohr vorhandenen zweiten Vorsprünge.

Der Drehzapfen durchgreift vorzugsweise die Kulisse und weist unterhalb der Kulisse mindestens einen nach außen vorstehenden Mitnahmestift auf, der beim Anheben des Drehzapfens in eine im Bereich der ebenen Seitenfläche befindliche Ausnehmung eingreift. Mittels des Mitnahmestiftes ist es möglich, die Kulisse mittels des Drehzapfens zu ergreifen, anzuheben und zu drehen, so daß sie nach dem Vorbeiführen an dem zweiten Vorsprung in der angehobenen Position auf dem zweiten Vorsprung aufliegt.

Auf der Kulisse liegt die Führungsbuchse. Die sonst übliche Nutenbuchse entfällt.

Die Haltevorrichtung weist vorzugsweise mindestens einen Führungsstab mit einer Federeinrichtung auf, mit dem der Schieber geführt wird. Die Federeinrichtung dient dazu, den Hubvorgang der Haltevorrichtung zu unterstützen. Der Führungsstab ist vorzugsweise zwischen einer Befestigungsplatte für die Montage am Fahrgestell des Fahrzeugs und dem Schieber angeordnet, wodurch eine insgesamt kompakte Ausführung erreicht wird.

Der Riegel, der vorzugsweise aus einem den Schieber umgreifenden Vierkantrohr besteht, besitzt einen Betätigungsgriff, der sich parallel zu einer der Riegelwände erstreckt. In der Verriegelungsposition liegt der Griff parallel zum Fahrzeug, so daß der Betätigungsgriff einerseits nicht nach außen vorsteht und zum anderen sofort erkennbar ist, ob sich der Riegel in Verriegelungsposition befindet.

Vorzugsweise ist der Griff auf der der Befestigungsplatte abgewandten Seite des Riegels befestigt. Beispielhafte Ausführungsformen der Erfindung werden nachfolgend anhand der Zeichnung näher erläutert.

Es zeigen:
- Fig. 1: einen Vertikalschnitt durch eine Haltevorrichtung mit nicht absenkbarem Twistlock in der unteren Höhenlage,
- Fig. 2: die in Fig. 1 gezeigte Vorrichtung in der oberen Höhenlage,
- Fig. 3a u. b: Vertikalschnitte durch Rohr, Innenrohr und Führungsbuchse des nicht absenkbaren Twistlock,
- Fig. 4: einen Vertikalschnitt durch eine Haltevorrichtung mit einem absenkbaren Twistlock in der unteren Höhenlage in abgesenkter Position,
- Fig. 5: die in Fig. 4 gezeigte Haltevorrichtung in der oberen Höhenlage mit ausgefahrenem Twistlock,
- Fig. 6: eine Draufsicht auf die in den Figuren 4 und 5 gezeigte Haltevorrichtung,
- Fig. 7a u. b: zwei Vertikalschnitte durch das Rohr und das Innenrohr für den absenkbaren Twistlock und
- Fig. 8a u. b: einen Vertikalschnitt durch die Kulisse sowie eine Draufsicht auf die Kulisse.

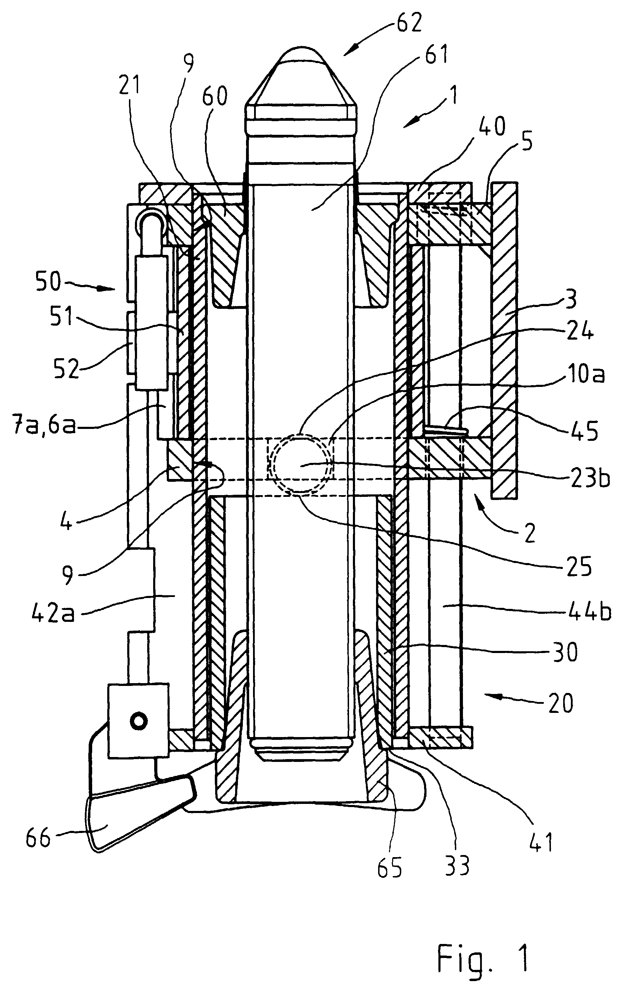

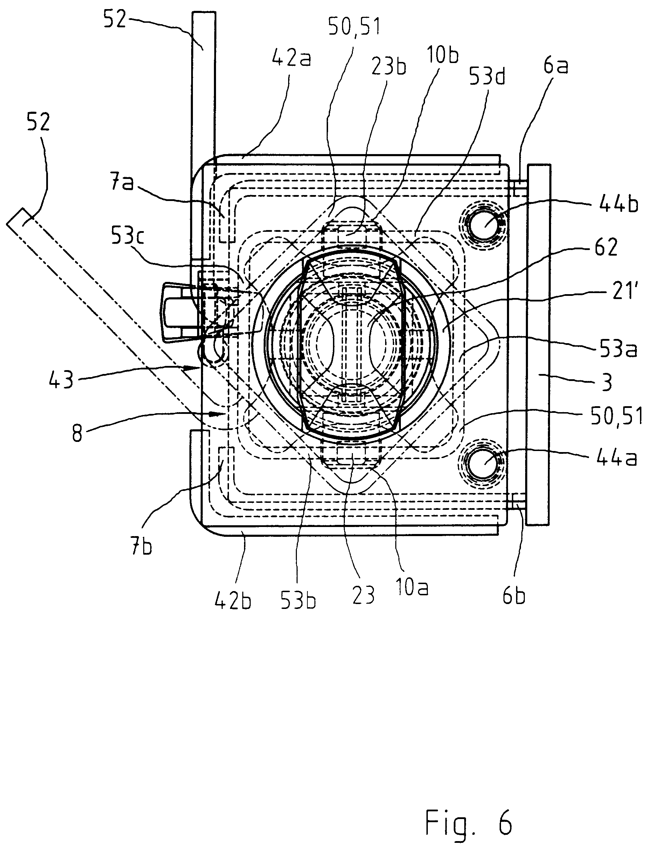

In der Fig. 1 ist eine Haltevorrichtung 1 im Vertikalschnitt dargestellt, die mittels einer Befestigungsplatte 3 am Fahrzeugrahmen befestigt werden kann. An der Befestigungsplatte 3 ist ein Gehäuse 2 angeordnet, das eine Badenwand 4, eine Deckwand 5 sowie zwei Umfangswände 6 a, 6 b (s. Fig. 6) aufweist, von denen in der Fig. 1 lediglich der Schenkel 7 a der Umfangswand 6 a zu sehen ist. Diese beiden Umfangswände 6 a, 6 b erstrecken sich zwischen der Bodenwand 4 und der Deckwand 5.

Im Innern des Gehäuses 2 ist zwischen Bodenwand 4 und Deckwand 5 ein Riegel 50 in Form eines Vierkantrohres 51 (s. Fig. 6) drehbar angeordnet, der vier Riegelwände 53 a bis d aufweist. Die Funktion des Riegels wird im Zusammenhang mit der Fig. 6 noch näher erläutert.

An der Außenseite der Riegelwand 53 c ist ein Betätigungsgriff 52 angeordnet, mit dem der Riegel um seine vertikale Achse gedreht werden kann.

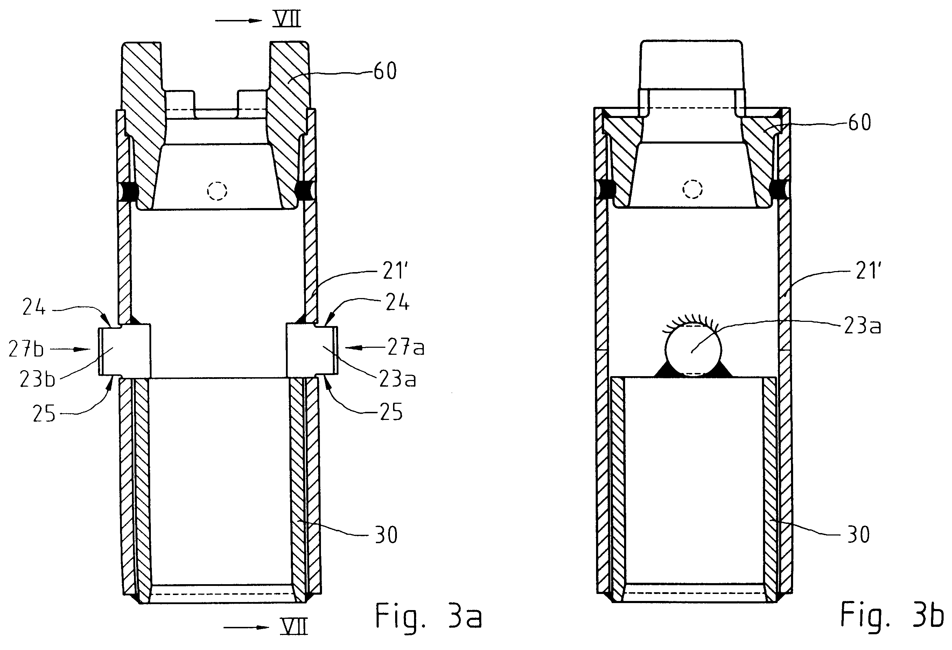

Das Vierkantrohr 51 umschließt den Schieber 40, der in der hier gezeigten Ausführungform ein zylindrisches Rohr 21 aufweist. Am oberen Ende des Rohrs ist eine obere Querplatte 40 und am unteren Ende eine untere Querplatte 41 angeschweißt, die jeweils Öffnungen für den Durchtritt des Drehzapfens 61 bzw. zum Eingreifen des Spannelementes 65 aufweisen, das in der hier gezeigten Ausführungsform eine Glockenmutter ist. Ferner sind zwischen der oberen Querplatte 40 und der unteren Querplatte 41 zwei Schieberwände 42a,b angeordnet. Im Innern des zylindrischen Rohrs 21 ist am oberen Ende eine Führungsbuchse 60 eingeschweißt, in der der Drehzapfen 61 geführt ist. Etwa in der Mitte des zylindrischen Rohrs 21 sind zwei kurze Bolzen 23 a, b eingesetzt, die deutlicher in den Figuren 3 a und 3 b zu sehen sind. Im unteren Bereich ist ein Innenrohr 30 eingesetzt, das sich vom unteren Ende bis zu den Bolzen 23 a, b erstreckt und diese abstützt. Das Spannelement 65 ist so ausgebildet, daß es in der Verriegelungsposition an der unteren Stirnfläche 33 des Innenrohrs 30 anliegt.

In der unteren Höhenlage befinden sich die Bolzen 23 a, b in der rechtwinkligen Ausnehmung 10 a der kreisförmigen Öffnung 9 der Bodenwand 4, wodurch die Lage der Bolzen 23 a, b fixiert wird. Außerdem untergreifen die Bolzen 23 a, b mit ihrer oberen Auflagefläche 24 das Vierkantrohr 51.

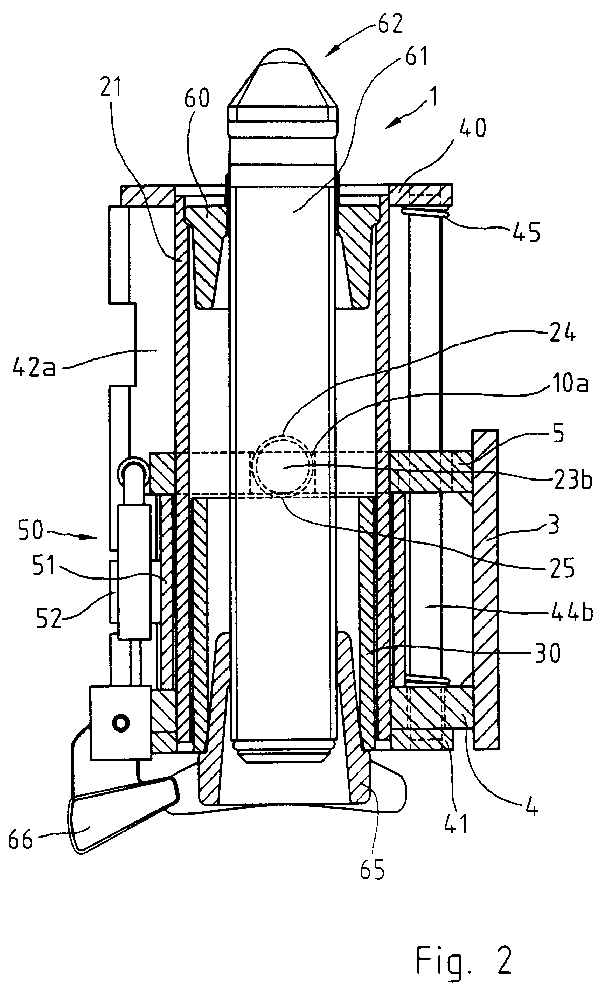

In der Fig. 2 ist die angehobene Position der Container-Verriegelungseinrichtung dargestellt. Durch Drehen des Vierkantrohrs 51, was mittels des Betätigungsgriffes 52 erfolgt, wird der Weg für die Bolzen 23 a, b freigemacht, so daß das Rohr 21 nach oben geschoben werden kann, bis sich die Bolzen 23 a, b oberhalb des Riegels 50 befinden. Der Riegel 50 wird darin in seine Verriegelungsposition zurückgedreht, wodurch die Bolzen 23 a, b und mit ihrer Auflagefläche 25 auf der oberen Stirnfläche des Vierkantrohrs 21 aufliegen. Während des Hochschiebens wird der Schieber in den beiden Führungsstäben 44 a, b, wovon lediglich 44 b in den Figuren 1 und 2 zu sehen ist, geführt. Mindestens ein Führungsstab 44 a, b weist eine Federeinrichtung 45 auf, die den Hubvorgang unterstützt. Die Feder ist deshalb zwischen der oberen Querplatte 40 und der Bodenwand 4 angeordnet. In der Deckwand 5 ist eine entsprechend große Öffnung vorgesehen, durch die sich sowohl der Führungsstab 44 a, b als auch die Federeinrichtung 45 erstreckt.

In den beiden gezeigten Höhenlagen kann durch Einführen des Kopfes 62 des Drehzapfens 61 in eine entsprechende Öffnung an der Unterseite des zu verriegelnden Containers dieser auf dem Fahrgestell fixiert und verriegelt werden. Hierzu wird der Drehzapfen nach dem Lösen des Spannelementes 65 gedreht und anschließend durch Einschrauben des Spannelementes 65 verspannt. Damit sich das Spannelement 65 nicht unbeabsichtigt lösen kann, ist an der unteren Querplatte 41 und der Schieberwand 42 a, b eine Nasenfalle 66 angeordnet, die von selbst in die in den Figuren 1 und 2 gezeigte Position fällt und die Nocken des Spannelementes 65 blockiert.

In den Figuren 3 a und b ist das Rohr 21 in zwei Vertikalschnitten dargestellt. In der Fig. 3 a ist die Einbaulage der beiden Bolzen 23 a, b dargestellt, die sich nach außen erstrecken und somit einen ersten Vorsprung 27 a, b bilden. Die Bolzen 23 a, b besitzen eine obere Auflagefläche 24 und eine untere Auflagefläche 25, die mit dem Vierkantrohr 51 des Riegels 50 in den beiden Höhenlagen zusammenwirken. Die Bolzen 23 a, b erstrecken sich geringfügig nach innen und sind, wie insbesondere aus der Fig. 3 b zu entnehmen ist, an dem Innenrohr 30 angeschweißt, das sich von dem unteren Ende des Rohrs 21 bis zu den Bolzen 23 a, b erstreckt. Am oberen Ende des Rohres 21 ist die Führungsbuchse 60 vorzugsweise eingeschweißt.

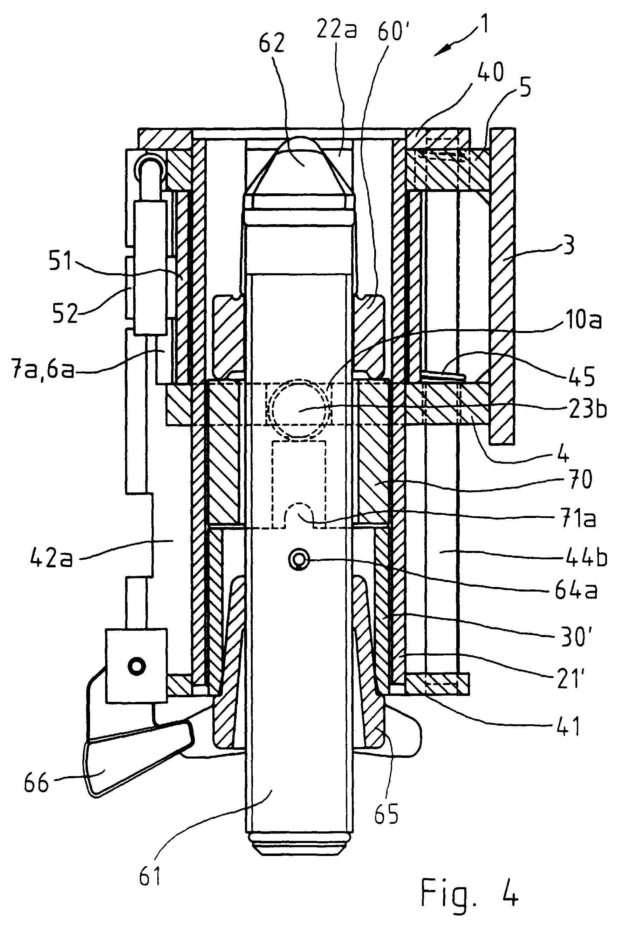

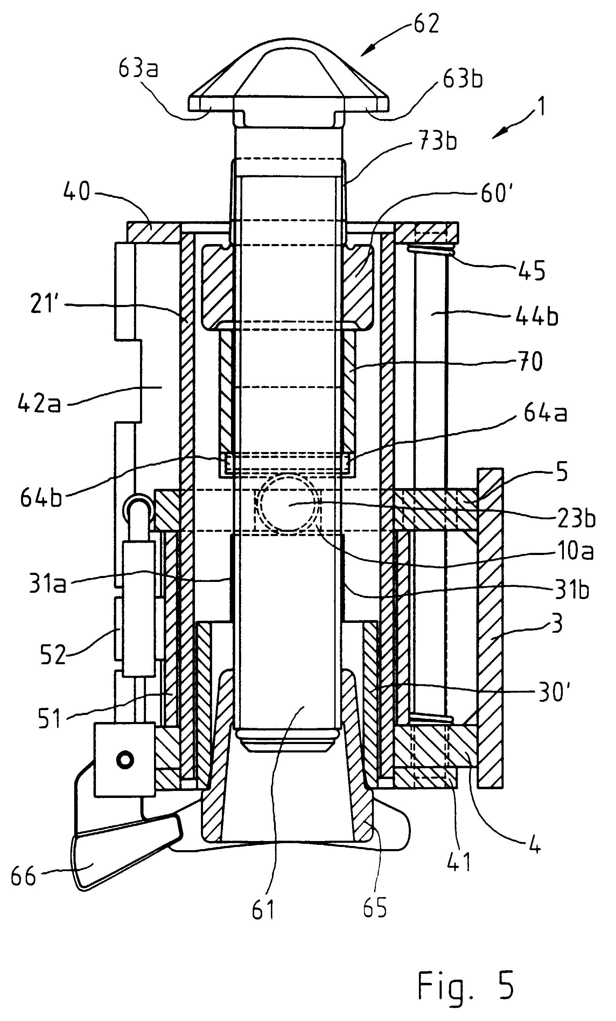

In der Fig. 4 ist eine weitere Ausführungsform der Haltevorrichtung 1 dargestellt. Es handelt sich hier um eine Container-Verriegelungseinrichtung, bei der der Drehzapfen 61 absenkbar ist. In der Fig. 4 ist der Drehzapfen in seiner abgesenkten Position dargestellt, wobei der Schieber 20 sich in seiner unteren Höhenlage befindet. Der Aufbau der Haltevorrichtung 1 unterscheidet sich lediglich durch unterschiedliche bzw. zusätzliche Bauteile im Innern des Rohrs 21'. Das Rohr 21' unterscheidet sich von dem in den Figuren 1 und 2 beschriebenen Rohr 21 dadurch, daß im oberen Bereich rechteckige Ausnehmungen 22a, b vorgesehen sind, in die die in der Fig. 5 gezeigten Pratzen 63a, b des Kopfes 62 des Drehzapfens 61 in der abgesenkten Position, und die Führungselemente 73a, b der Führungsbuchse 60 bzw. der Führungsbuchse 60' in der oberen Position eingreifen können.

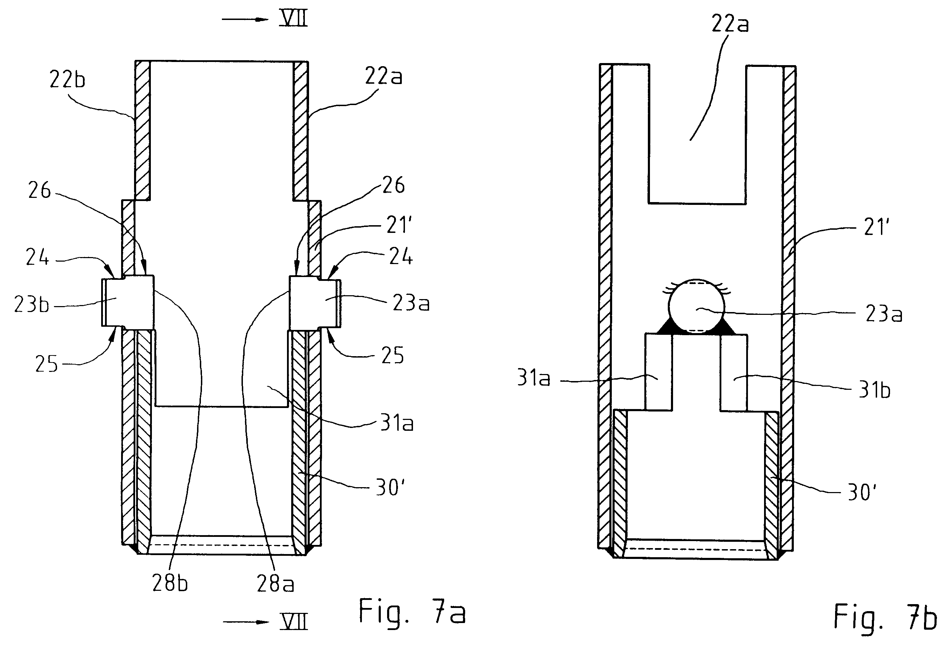

Das Rohr 21' weist ebenfalls zwei Bolzen 23 a, b auf, die in gleicher Weise mit dem Vierkantrohr 51 des Riegels 50 zusammenwirken, wie dies im Zusammenhang mit den Figuren 1 und 2 bereits beschrieben wurde. Auch bei dieser Ausführungsform werden die Bolzen 23 a, b von dem Innenrohr 30' abgestützt, das allerdings zwei Ausnehmungen 22 a, b aufweist, was im Zusammenhang mit den Figuren 7 a und b noch beschrieben wird. Diese Ausnehmungen sind erforderlich, damit eine Kulisse 70 im Rohr 21' abgesenkt und geführt werden kann.

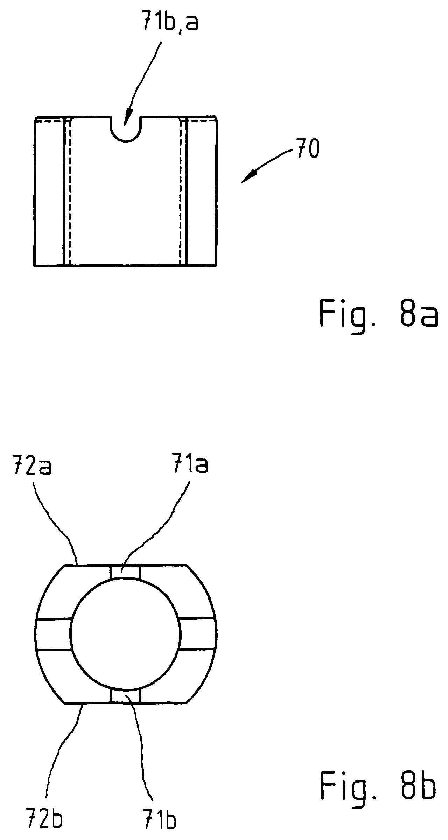

Diese Kulisse 70, die im Schnitt und in der Draufsicht in den Figuren 8 a und 8 b dargestellt ist, besteht aus einem Rohrabschnitt, der zwei ebene Seitenflächen 72 a und 72 b aufweist, in denen sich jeweils eine Ausnehmung 71 a, b befindet.

Der Drehzapfen 61 weist zwei nach außen weisende Mitnahmestifte 64 a, b auf, die beim Anheben des Drehzapfens 61 in die Ausnehmungen 71 a, b der Kulisse 70 eingreifen. Wenn der Drehzapfen 61 zum Erreichen der ausgefahren Position angehoben wird, wird gleichzeitig die Kulisse 70 und die daraufliegende Führungsbuchse 60' angehoben, wobei die beiden ebenen Seitenflächen 72 a, b an den Bolzen 23 a, b vorbeigeführt werden, bis sich die Kulisse 70 oberhalb der Bolzen 23 a, b befindet. Durch Drehen des Drehzapfens 61 wird die Kulisse 70 ebenfalls durch die Mitnahmestifte 64 a, b gedreht, so daß die Kulisse mit den Abschnitten, die einen Außendurchmesser aufweisen, der geringfügig kleiner ist, als der Innendurchmesser des Rohrs 21', über den Zapfen 23 a, b zu liegen kommen. Die Kulisse 70 legt sich darin auf die Oberseite der nach innen vorstehenden Bolzen, wodurch eine stabile Lage der ausgefahrenen Position der Führungsbuchse 60' und des Drehzapfens 61 erreicht wird.

In der Fig. 5 ist diese ausgefahrene Position des Drehzapfens 60 und gleichzeitig die obere Höhenlage der Haltevorrichtung 1 dargestellt. Da hierbei der Drehzapfen 61 gedreht worden ist, werden die Pratzen 63 a, b des Kopfes 62 sichtbar. Die Verriegelung und das Verschieben zum Erreichen der oberen Höhenlage erfolgt in der gleichen Weise wie im Zusammenhang mit den Figuren 1 und 2 beschrieben wurde.

In der Fig. 6 ist die Draufsicht auf die in den Figuren 4 und 5 dargestellt Vorrichtung zu sehen, wobei die Ausgestaltung des Gehäuses 2 und des Riegels 50 auch für die Ausführungsform zutrifft, die in den Figuren 1 und 2 dargestellt ist. Der Riegel 50 besteht aus einem Vierkantrohr 51 mit den Riegelwänden 53 a bis d. An der Riegelwand 53 c ist der Betätigungsgriff 52 angeordnet, der parallel zur Riegelwand 53 c angeordnet ist. Damit der Betätigungsgriff 52 von außen zugänglich ist und bewegbar ist, besitzen die beiden Umfangswände 6 a und b des Gehäuses 2 im linken Bereich nur kurze Schenkel 7 a, b, so daß dazwischen eine rechteckige Öffnung 8 verbleibt. Die Schieberwände 42 a, b sind entsprechend ausgebildet.

Wem der Griff 52 in die gestrichelte Position bewegt wird, wird der Riegel entriegelt, was bedeutet, daß sich die Bolzen 23 a, b im Bereich der diagonal gegenüberliegenden Eckpunkte des Vierkantrohrs 51 befinden, wodurch das Rohr 21' mit den Bolzen 23 a, b in vertikale Richtung verschiebbar wird. Nach Erreichen der jeweiligen Höhenlage, wird der Griff 52 und damit das Vierkantrohr 51 wieder in die Ausgangslage, also in die Verriegelungslage, zurückgedreht, so daß die Bolzen 23 a, b entweder mit ihrer Oberseite oder mit ihrer Unterseite an dem Vierkantrohr 51 aufliegen.

In den Figuren 7 a und b ist das Rohr 21' dieser Ausführungsform dargestellt. Es sind im oberen Bereich die beiden rechteckigen Ausnehmungen 22 a, b dargestellt, in die Führungselemente der Führungsbuchse 60' und die Pratzen 63a,b in der abgesenkten Position des Drehzapfens 61 eingreifen. Die beiden Bolzen 23 a, b bilden an der Innenseite zweite Vorsprünge 28 a, b und weisen entsprechende Auflageflächen 26 auf, auf denen die Kulisse 70 in der angehobenen Position aufliegt.

Die Bolzen 23 a, b sind ebenfalls an einem Innenrohr 30' angeschweißt, wobei jedoch im Gegensatz zu der ersten Ausführungsform Ausnehmungen 31a, b vorgesehen sind, um die Kulisse 70 in ihrer abgesenkten Position aufnehmen zu können. **Bezugszeichen**
- 1: Haltevorrichtung
- 2: Gehäuse
- 3: Befestigungsplatte
- 4: Bodenwand
- 5: Deckwand
- 6 a, b: Umfangswand
- 7 a, b: Schenkel
- 8: rechteckige Öffnung
- 9: kreisförmige Öffnung
- 10 a, b: rechteckige Aussparung
- 20: Schieber
- 21, 21': Rohr
- 22 a, b: rechteckige Ausnehmung
- 23 a, b: Bolzen
- 24: obere Auflagefläche
- 25: untere Auflagefläche
- 26: innere Auflagefläche
- 27 a, b: erster Vorsprung
- 28 a, b: zweiter Vorsprung
- 30, 30': Innenrohr
- 31 a, b: Ausnehmung
- 33: untere Stirnfläche
- 40: obere Querplatte
- 41: untere Querplatte
- 42 a, b: Schieberwand
- 43: Öffnung
- 44 a, b: Führungsstab
- 45: Feder
- 50: Riegel
- 51: Vierkantrohr
- 52: Betätigungsgriff
- 53 a,b,c,d: Riegelwand
- 60, 60': Führungsbuchse
- 61: Drehzapfen
- 62: Kopf
- 63 a, b: Pratze
- 64 a, b: Mitnahmestift
- 65: Spannelement
- 66: Nasenfalle
- 70: Kulisse
- 71 a, b: Ausnehmung
- 72 a, b: ebene Seitenfläche
- 73 a, b: Führungselement der Führungsbuchse

## Patentansprüche

1. Am Fahrgestell eines Fahrzeugs zu befestigende Haltevorrichtung für eine in zwei Höhenlagen arretierbare Container-Verriegelungseinrichtung, die einen Drehzapfen mit einem Spannelement aufweist, wobei die Haltevorrichtung einen in vertikaler Richtung beweglichen Schieber aufweist, der in den beiden Höhenlagen mittels eines Riegels verriegelbar ist, **dadurch gekennzeichnet,** daß die Container-Verriegelungseinrichtung im Schieber (20) angeordnet ist.

2. Haltevorrichtung nach Anspruch 1, **dadurch gekennzeichnet,** daß der Schieber (20) ein Rohr (21, 21') aufweist, in dem der Drehzapfen (61) verschiebbar gelagert ist.

3. Haltevorrichtung nach Anspruch 2, **dadurch gekennzeichnet,** daß das Rohr (21, 21') an seiner Außenseite mindestens einen ersten Vorsprung (27 a, b) aufweist, der in den beiden Höhenlagen mit dem Riegel (50) zusammenwirkt.

4. Haltevorrichtung nach einem der Ansprüche 2 oder 3, **dadurch gekennzeichnet,** daß das Rohr (21, 21') senkrecht zu seiner Längsachse von mindestens einem Bolzen (23 a, b) durchsetzt ist, dessen eines Ende den ersten Vorsprung (27 a, b) bildet und dessen anderes Ende gegenüber der Rohrwand nach innen vorsteht.

5. Haltevorrichtung nach einem der Ansprüche 2 bis 4, **dadurch gekennzeichnet,** daß das Rohr (21, 21') ein Innenrohr (30, 30') aufweist, das sich vom unteren Ende des Rohrs (21, 21') bis zum Bolzen (23 a, b) erstreckt und diesen abstützt.

6. Haltevorrichtung ach Anspruch 5, **dadurch gekennzeichnet,** daß sich das Spannelement (65) an der unteren Stirnfläche (33) des Innenrohrs (30, 30') abstützt.

7. Haltevorrichtung nach einem der Ansprüche 5 oder 6, **dadurch gekennzeichnet,** daß das Innenrohr (30, 30') mit dem Bolzen (23 a, b) verschweißt ist.

8. Haltevorrichtung nach einem der Ansprüche 2 bis 7, **dadurch gekennzeichnet,** daß eine Führungsbuchse (60) für den Drehzapfen (61) am oberen Ende des Rohrs (21, 21') befestigt ist.

9. Haltevorrichtung nach einem der Ansprüche 2 bis 8, **dadurch gekennzeichnet,** daß im Rohr (21, 21') oberhalb des Innenrohrs (30, 30') eine in eine angehobene und eine abgesenkte Position verschiebbare Kulisse (70) angeordnet ist und daß der Bolzen (23 a, b) im Innern des Rohrs (21, 21') einen zweiten Vorsprung (28 a, b) bildet, auf dem sich die Kulisse (70) in der angehobenen Position abstützt.

10. Haltevorrichtung nach Anspruch 9, **dadurch gekennzeichnet,** daß die Kulisse (70) aus einem Rohrstück besteht, dessen Außendurchmesser geringfügig kleiner als der Innendurchmesser des Rohrs (21, 21') ist und daß die Kulisse (70) mindestens eine gegenüber dem Außenumfang zurückversetzte ebene Seitenfläche (72 a, b) zum Vorbeiführen am Bolzen (23 a, b) aufweist.

11. Haltevorrichtung ach einem der Ansprüche 9 oder 10, **dadurch gekennzeichnet,** daß der Drehzapfen (61) die Kulisse (70) durchgreift und unterhalb der Kulisse (70) mindestens einen nach außen vorstehenden Mitnahmestift (64 a, b) aufweist, der beim Anheben des Drehzapfens (61) in eine im Bereich der ebenen Seitenfläche (72 a, b) befindliche Ausnehmung (71 a, b) eingreift.

12. Haltevorrichtung nach einem der Ansprüche 9 bis 11, **dadurch gekennzeichnet,** daß auf der Kulisse (70) eine Führungsbuchse (60') aufliegt.

13. Haltevorrichtung nach einem der Ansprüche 1 bis 12, **dadurch gekennzeichnet,** daß mindestens ein mit einer Federeinrichtung (45) versehener Führungsstab (44 a, b) vorgesehen ist, der zwischen einer Befestigungsplatte (3) für die Montage am Fahrgestell des Fahrzeugs und dem Schieber (20) angeordnet ist.

14. Haltevorrichtung nach einem der Ansprüche 1 bis 13, **dadurch gekennzeichnet,** daß der Riegel (50) aus einem den Schieber (20) umgreifenden Vierkantrohr (51) besteht.

15. Haltevorrichtung nach Anspruch 14, **dadurch gekennzeichnet,** daß am Riegel (50) ein Betätigungsgriff (52) angeordnet ist, der sich parallel zu einer Riegelwand (53 a, b, c, d) erstreckt.

16. Haltevorrichtung nach Anspruch 15, **dadurch gekennzeichnet,** daß der Betätigungsgriff (52) auf der der Befestigungsplatte (3) gegenüberliegenden Seite des Riegels (50) befestigt ist.
